# EUROPEAN PATENT SPECIFICATION

(11) **EP 0 774 053 B1**
(45) Date of publication and mention of the grant of the patent: **02.09.1998**
(21) Application number: 94903190.0
(22) Date of filing: 25.11.1993
(51) Int. Cl.: F01N 3/02, F01N 3/28, B01J 35/04

(54) **CATALYTIC CONVERTER UNIT FOR MOTOR EXHAUSTS**
ABGASKATALYSATOREINHEIT FÜR VERBRENNUNGSMOTOREN
POT CATALYTIQUE POUR LIGNE D'ECHAPPEMENT DE MOTEUR

(30) Priority: 15.12.1992 SE 9203781
(43) Date of publication of application: 21.05.1997
(73) Proprietor: SANDVIK AKTIEBOLAG, 811 81 Sandviken (SE)
(72) Inventor: SUNDSTRÖM, Erik, S-811 60 Sandviken (SE)
(74) Representative: Taquist, Lennart
(86) International application number: SE9301015
(87) International publication number: WO9413937

(56) References cited:
- EP-A- 0 121 174
- EP-A- 0 216 130
- EP-A- 0 507 216
- DE-A- 3 407 866
- DE-A- 3 737 248
- US-A- 4 719 680

## Description

### Background

It is previously known to make catalytic converter units for combustion engines by applying layers of active catalyst material to carrier bodies formed as extruded ceramic monoliths according to the patent EP 275 262, or wound metal foils according to the patent US 4,719,680, or oxidized metal according to the patent SE 463 816. Six problems are common to all known designs and make the general application difficult to achieve.
The first problem is the sensitivity to vibrations, in the case of ceramic carriers due to brittleness, in the case of metallic carriers due to insufficient adhesion between metal layers. The second problem is the sensitivity to uneven heating, in the case of ceramic carriers due to high stiffness and low tensile strain, in the case of metallic carriers due to the anisotropic elasticity of a mixture of smooth and corrugated foils. The third problem is the plugging of channels due to soot and other deposits, especially with diesel engines, where ceramic carriers are often plugged in spite of countermeasures such as recurrent cleaning with a gas flame, while metallic carriers can avoid the problem by perforations in the metal foils according to the patent DE 37 37 248.

Other problems concern the possibility to adapt the carrier design in various respects to restricted spaces occuring in automobiles, chain saws etcetera. In some of these applications non-cylindrical shapes are required, which in the case of ceramic carriers leads to severe stresses due to uneven heating, and often makes use of wound metal carriers impossible. A variation of the cross-section along the carrier is impossible with known designs. Finally, non-straight shapes are difficult to achieve with ceramic carriers and impossible with metallic carriers of known design.

The invention concerns a catalytic converter as set out in claim 1 and a method of making a carrier body for a catalytic converter as set out in claim 5. The carrier body is constructed in a novel way which considerably improves the sensitivity to plugging, vibrations and uneven heating, and which allows carriers to be made with arbitrary and variable cross-section and lengthwise curvature.

### Description of the invention

The carrier body of a catalytic converter according to the invention comprises a plurality of spiral strips made by spiral winding of a metal strip between a mandrel and rollers, where the width of the strip is so narrow in relation to the circumference of the mandrel that the edges do not overlap but are separated by a slot. Compared to a tube of corresponding dimensions, such a spiral strip is extremely flexible in bending, in elongation and in radial compression. Groups of several closely packed spiral strips have a low and equal stiffness in all directions, compared to wound metal foil carriers which are severely anisotropic, with a gross stiffness axially twice as high, and radially a tenth as high as tangentially. When exposed to uneven heating, the latter design would suffer high shear stresses in unfavorable directions, tending to separate the layers from each other. A carrier body according to the invention will suffer only low stresses, mainly compressive.

Because of the low and even stiffness, vibrations caused by the engine or uneven roads will cause only low stresses. In particular the invention prevents formation of regions with greatly differing stiffness and resonance frequency such as occur locally in an anisotropic wound foil carrier where the layers have started to separate, and where stresses thereafter are concentrated.

Through the narrow slot between the strip edges, exhaust gas from a locally plugged channel can cross into a neighbouring channel until the plugging is bypassed. The catalytic converter according to the invention will continue functioning even with a large number of locally plugged channels, while a converter according to known design will soon loose efficiency when each locally plugged channel will be totally inactivated.

Each spiral strip is separately manufactured and cut to the desired length, whereupon a chosen number of spiral strips are bundled to the desired cross-section under slight compression. Due to the flexibility of the spiral strips this is possible even when the cross-section is unsymmetric or variable or when the carrier body is curved. The bundling is preferrably done in templets or molds, and the bundles can be held together by metal wire or similar means.

The bundled spiral strips are made to adhere to each other to form a monolith in known ways, such as by heat treatment in a reducing atmosphere. Spiral strips from steel are preferrably made from chrome steel with added aluminium, which after heat treatment in air forms an oxide layer which is a suitable foundation for the wash-coat and the active catalyst. With spiral strips from aluminium there is also a possibility to perform anodic oxidation followed by heat treatment to convert it to alumina after bundling, to produce a coherent monolith.

The invention is described in more detail with reference to the figures where figure 1 shows a spiral strip, figure 2 a cross-section through a carrier monolith, figures 3,4 and 5 different monolith shapes possible with the invention.

A spiral strip can be made by winding a uniformly narrow metal strip spirally around a cylindrical mandrel between two or more rollers placed obliquely against the mandrel. By choosing the strip width in relation to the spiral pitch (20) and the mandrel diameter, and in consideration of the back-spring after winding, a narrow slot (13) is created between the edges of the strip, while both the outside (11) and the inside (12) are parts of a circular cylindrical surface. Such a spiral strip has low axial stiffness and can be considerably extended without departing from the circular cross-section and without dangerous stresses. The width of the slot (13) may change somewhat, but the changes will be smallest when the pitch angle is 45 degrees. The forces required to bend a spiral strip are small.

Spiral strips cut to the desired length are bundled to the shape of the carrier body, and the bundle is held together by metal wire, strip or foil, or by being placed in a mold of heat resistant ceramic. This brings the outsides (11) of the spiral strips in contact, and the bundle may then be heated in a reducing atmosphere such as dry hydrogen, leading to partial recrystallization and diffusion bonding in the regions (17) where the outsides (11) of the spiral strips touch. Since these regions (17) are shorter than the spiral pitch (20), there are numerous independent such regions, and less risk that fracture in one region will spread along the spiral strip, than if tubes without openings (13) had been bonded in this way. A suitable temperature would be 700-1000 degrees C for steel strip, depending on the choice of material.

After bonding the spiral tubes form a carrier monolith with longitudinal parallel channels, some of which have a circular cross-section (18) and are a third of the total number, the others having a triangular section (19). The slots (13) in the spiral strips are still open, and in every cross-section a first group (14) of slots will meet slots from the adjoining spiral strip in the bonded region (17) to form a connection between two channels with circular section (18). A second group (15) of slots will connect a circular section channel (18) with a triangular section channel (19), while a third group (16) of slots will only form recesses in the bonded region. Since the slots run spirally they will over a length equal to the pitch (20) have occupied all possible angular positions. forming numerous connections between the channels, especially when all spiral strips are wound in the same direction.

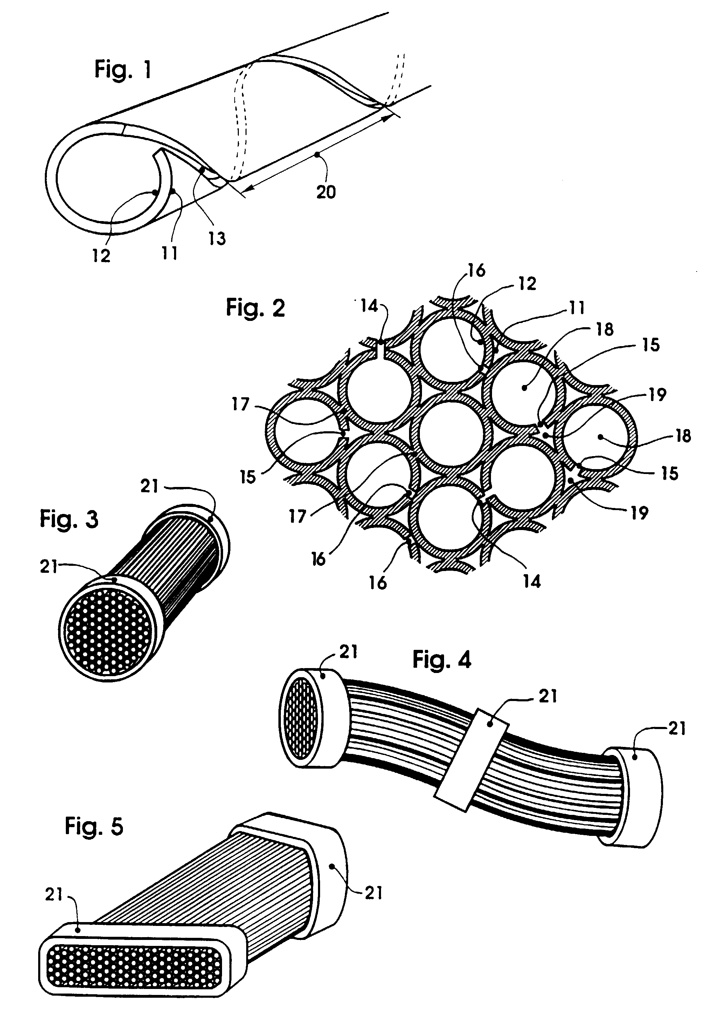

In the simplest case the monoliths are shaped as straight cylinders, corresponding to the shape of wound metal foils. To avoid damage during jacketing and assembly it is suitable to reinforce the ends with collars (21). In some cases, such as when mounting in the immediate vicinity of the engine it may be necessary to make the whole monolith curved as shown in figure 4, and more reinforcing collars may then be needed. This applies especially to applications on hand-held power tools such as chainsaws, where the space inside the covers is very limited. Other restrictions may hold for mounting under the floor of a vehicle, where the monolith may be designed with flat section for at least part of its length and supported by a stiff jacket.

Suitable dimensions for the strip and the channels depend on the size and working conditions of the engine, and are normally in the range of 0.05 to 0.2 mm thickness, 1.4 to 2.5 mm channel diameter and 3.5 to 7 mm strip width.

The monolith may also be heat treated in oxidizing atmosphere to create an oxide layer which is suitable as foundation for an active catalyst layer. To create a strongly bonded oxide layer, a chromium steel with approximately 20 % chromium and approximately 5 % aluminium is preferable. If a washcoat is desired as part of the active catalyst layer as is common, it may be applied at any suitable time during the manufacture of the carrier body, and may become part of the bonding between spiral strips.

## Claims

1. Catalytic converter for exhaust from combustion engines, comprising a carrier body with longitudinal channels and active catalyst in the channels,
**characterized** by the carrier body comprising a plurality of metal strips spirally wound such that a narrow slot (13) is present between the strip edges, bundled to the desired shape of the carrier body and bonded by heat treatment.

2. Catalytic converter according to claim 1,
**characterized** by the metal strips being wound in the same direction.

3. Catalytic converter according to claim 1,
**characterized** by the shape of the carrier body being curved.

4. Catalytic converter according to claim 1,
**characterized** by the shape of the carrier body having variable cross-section.

5. Method of making a carrier body for a catalytic converter, **characterized** by comprising the steps of spiral winding of a metal strip on a mandrel forming a narrow slot (13) between its edges, bundling a plurality of helical strips to a shape desired for the carrier body, and heat treating the bundle at a temperature high enough to make the outsides (11) of the spiral strips adhere in the regions (17) where they touch.

6. Method according to claim 5, **characterized** by heat treatment being done in a non-oxidizing atmosphere.

7. Method according to claim 5, **characterized** by heat treatment being done in an oxidizing atmosphere to produce an oxide layer suitable for application of an active catalyst.

8. Method according to claim 5, **characterized** by the bundle being curved.

9. Method according to claim 5, **characterized** by the bundle having a variable cross-section.

## Patentansprüche

1. Katalytischer Konverter für Abgas aus Verbrennungsmotoren mit einem Trägerkörper mit Längskanälen und aktivem Katalysator in den Kanälen, **dadurch gekennzeichnet**, daß der Trägerkörper mehrere derart spiralförmig gewickelte Metallstreifen umfaßt, daß ein schmaler Schlitz (13) zwischen den Streifenkanten vorliegt, und daß die Metallstreifen zu der erwünschten Form des Trägerkörpers gebündelt und durch Hitzebehandlung miteinander verbunden sind.

2. Katalytischer Konverter nach Anspruch 1, **dadurch gekennzeichnet**, daß die Metallstreifen in der gleichen Richtung gewickelt sind.

3. Katalytischer Konverter nach Anspruch 1, **dadurch gekennzeichnet**, daß die Form des Trägerkörpers gekrümmt ist.

4. Katalytischer Konverter nach Anspruch 1, **dadurch gekennzeichnet**, daß die Form des Trägerkörpers variablen Querschnitt besitzt.

5. Verfahren zur Herstellung eines Trägerkörpers für einen katalytischen Konverter, **gekennzeichnet durch** die Stufen, in denen man einen Metallstreifen spiralförmig auf einem Dorn unter Bildung eines schmalen Schlitzes (13) zwischen seinen Kantnen aufwickelt, mehrere spiralförmige Streifen zu einer für den Trägerkörper erwünschten Form bündelt und das Bündel bei einer genügend hohen Temperatur hitzebehandelt, um die Außenseiten (11) der spiralförmigen Streifen in den Bereichen (17), wo sie sich berühren, aneinander anhaften zu lassen.

6. Verfahren nach Anspruch 5, **dadurch gekennzeichnet**, daß die Hitzebehandlung in einer nicht oxidierenden Atmosphäre erfolgt.

7. Verfahren nach Anspruch 5, **dadurch gekennzeichnet**, daß die Hitzebehandlung in einer oxidierenden Atmosphäre erfolgt, um eine für die Aufbringung eines aktiven Katalysators geeignete Oxidschicht zu erzeugen.

8. Verfahren nach Anspruch 5, **dadurch gekennzeichnet**, daß das Bündel gekrümmt wird.

9. Verfahren nach Anspruch 5, **dadurch gekennzeichnet**, daß das Bündel einen variablen Querschnitt hat.

## Revendications

1. Pot catalytique destiné à l'échappement de moteurs thermiques, comprenant un corps de support présentant des canaux longitudinaux et un catalyseur actif dans les canaux, caractérisé par le fait que le corps de support comprend une pluralité de rubans métalliques enroulés en spirale de façon qu'une fente étroite (13) soit présente entre les bords des rubans, regroupés en faisceau suivant la forme désirée du corps de support, et liés par traitement thermique.

2. Pot catalytique selon la revendication 1,
caractérisé par le fait que les rubans métalliques sont enroulés dans le même sens.

3. Pot catalytique selon la revendication 1,
caractérisé par le fait que la forme du corps de support est incurvée.

4. Pot catalytique selon la revendication 1,
caractérisé par le fait que la forme du corps de support présente une section transversale variable.

5. Procédé de fabrication d'un corps de support destiné à un pot catalytique, caractérisé par le fait qu'il comprend les étapes consistant à enrouler en spirale un ruban métallique sur un mandrin en formant une fente étroite (13) entre ses bords, à regrouper en faisceaux une pluralité de rubans en spirale suivant une forme souhaitée pour le corps de support, et à traiter thermiquement le faisceau à une température suffisamment élevée pour faire adhérer les faces extérieures (11) des rubans en spirale dans les régions (17) où elles se touchent.

6. Procédé selon la revendication 5, caractérisé par le fait que le traitement thermique est réalisé sous une atmosphère non oxydante.

7. Procédé selon la revendication 5, caractérisé par le fait que le traitement thermique est réalisé sous une atmosphère oxydante afin de produire une couche d'oxyde convenant pour l'application d'un catalyseur actif.

8. Procédé selon la revendication 5, caractérisé par le fait que le faisceau est incurvé.

9. Procédé selon la revendication 5, caractérisé par le fait que le faisceau présente une section transversale variable.
